# EUROPÄISCHE PATENTSCHRIFT

(11) **EP 1 448 744 B1**
(45) Veröffentlichungstag und Bekanntmachung des Hinweises auf die Patenterteilung: **14.12.2005**
(21) Anmeldenummer: 02777219.3
(22) Anmeldetag: 26.09.2002
(51) Int. Cl.: C09J 7/04

(54) **KLEBEBAND MIT GLATTGESCHLIFFENER TRÄGEROBERFLÄCHE**
ADHESIVE TAPE COMPRISING A POLISHED SUPPORT SURFACE
BANDE ADHESIVE A SURFACE SUPPORT LISSEE

(30) Priorität: 16.10.2001 DE 10150453; 10.04.2002 DE 20205486 U
(43) Veröffentlichungstag der Anmeldung: 25.08.2004
(73) Patentinhaber: certoplast Vorwerk & Sohn GmbH, 42285 Wuppertal (DE)
(72) Erfinder: MUNDT, Stefan, 40593 Düsseldorf (DE)
(74) Vertreter: Nunnenkamp, Jörg
(86) Internationale Anmeldenummer: PCT/EP2002/010801
(87) Internationale Veröffentlichungsnummer: WO 2003/033611

(56) Entgegenhaltungen:
- EP-A- 0 942 057
- DE-C- 4 341 532

## Beschreibung

Die Erfindung betrifft ein Klebeband mit einem bandförmigen Träger, und mit einer ein- oder beidseitig auf den Träger aufgebrachten Kleberberbeschichtung.

Derartige Klebebänder sind in vielfältiger Ausgestaltung aus der Praxis bekannt und werden im Übrigen in der Literatur beschrieben (vgl. nur beispielhaft die EP 0 942 057 A1 mit weiteren Nachweisen).

Der Erfindung liegt das technische Problem zugrunde, ein Klebeband der eingangs beschriebenen Ausgestaltung so weiter zu entwickeln, dass bei reduzierten Herstellungskosten die Wiederverwertbarkeit erleichtert ist, eine einfache Kleberbeschichtung gelingt und insbesondere den Anforderungen im Automobilbereich (Temperatur- sowie Öl-, Benzin-, Dieselbeständigkeit etc.) Rechnung getragen wird.

Zur Lösung dieses technischen Problems ist ein gattungsgemäßes Klebeband dadurch gekennzeichnet, dass der Träger als Gewebe, Vlies oder vergleichbares Flächengebildet aus Fasern, insbesondere Kunststofffasern, ausgeführt ist und zumindest bereichsweise ein- oder beidseitig eine glattgeschliffene Oberfläche aufweist. Vorzugsweise ist diese Oberfläche des Trägers (jeweils) gechintzt.

Durch die glattschleifende Bearbeitung der Oberfläche des Trägers bzw. den an dieser Stelle erreichten Hochglanz- oder Chintz-Effekt wird eine quasi geschlossene und dadurch schmutzabweisende Oberfläche erzielt. Dabei kommt zumeist eine durchgängige gechintzte Oberfläche einseitig des bandförmigen Trägers zum Einsatz, und zwar auf der der Kleberbeschichtung abgewandten Seite. Grundsätzlich umfasst die Erfindung natürlich auch Ausgestaltungen derart, dass die Oberfläche lediglich sektions- bzw. bereichsweise glattgeschliffen ist.

Jedenfalls eröffnet der erfindungsgemäß erreichte Hochglanz- bzw. Chintzeffekt eine Vielzahl von Vorteilen. So ist die Dichtigkeit des bandförmigen Trägers gegenüber herkömmlichen - mit nicht glattgeschliffener Oberfläche ausgerüsteten Trägern - gegenüber verschiedenen Medien wie Öl, Diesel, Benzin etc. wesentlich erhöht. Dadurch erklärt sich der schmutzabweisende Charakter. Tatsächlich nimmt die Dichtigkeit des Trägers Dimensionen an, wie sie bisher nur von beschichteten bzw. lackierten Trägern bekannt waren. Ein Maß für die Dichtigkeit des Trägers ist die Luftdurchlässigkeit, welche sich durch den Chintzeffekt je nach Trägertyp auf bis zu 5% des ursprünglichen Wertes reduzieren lässt.

Es wird eine insgesamt bereichsweise oder durchgängig versiegelt erscheinende Trägeroberfläche zur Verfügung gestellt, die bisher nur bei beschichteten oder lackierten Trägern beobachtet wurde. Gegenüber solchen Trägerbändern überzeugt das erfindungsgemäße Klebeband durch einen sortenreinen und kostengünstigen Aufbau, welcher besonders bei der Wiederverwertung von Vorteil ist.

Durch die sehr glatte und hochverdichtete ein- und/oder beidseitige Oberfläche des Trägers lässt sich eine Beschichtung viel einfacher als bisher erreichen, weil der zumeist aufgerakelte Kleber kaum in das Trägermaterial eindringt, so dass ein im Vergleich zum Vorbekannten geringeres Klebstoffauftragsgewicht bei vergleichbaren Haftwerten erreicht wird. Hierdurch bedingt ist auch der weitere Vorteil, dass sich Klebstoffe bzw. Schmelzklebstoffe niedriger Viskosität sehr einfach auf den erfindungsgemäß gechintzten Träger auftragen lassen, weil dieser Klebstoff - wie beschrieben - nicht oder kaum in den Träger eindringt bzw. diesen durchdringt. Solche niedrigviskosen Schmelzklebstoffe lassen sich prinzipiell einfacher fördern und bearbeiten, als dies bei hochviskosen Klebstoffen der Fall ist. Infolgedessen steigt die Produktionsgeschwindigkeit und ist der Ausschuss vermindert, so dass zusammenfassend die Produktivität deutlich steigt und damit die Kosten sinken.

Da zumeist die der Kleberbeschichtung abgewandte Oberfläche gechintzt ist, wird nicht nur das erfindungsgemäße Klebeband im Ganzen vor Medieneinflüssen geschützt, sondern insbesondere auch die sich gleichsam unterhalb der geschliffenen Oberfläche befindliche Kleberbeschichtung. Das hat zur Folge, dass sich die Hafteigenschaften des beschriebenen Klebebandes von äußeren Einflüssen nahezu unbeeindruckt zeigen und insbesondere eine hohe Langzeitstabilität aufweisen.

Schließlich ist zu berücksichtigen, dass der Prozess des Chintzens dem Träger einen besonders geschmeidigen Charakter verleiht, so dass sich das Anpassungsvermögen des hieraus hergestellten Klebebandes, d.h. seine Schmiegsamkeit, erhöht und eine verbesserte Fixierung von beispielsweise zu bündelnden Kabeln gegeneinander ermöglicht. Solchermaßen hergestellte Kabelsätze zeichnen sich also durch eine besondere Flexibilität und eine glatte Oberfläche aus.

Um den beschriebenen Chintzeffekt erreichen zu können, wird der Träger bzw. das Trägermaterial zwischen zwei Walzen bzw. Kalanderwalzen hindurchgeführt. Das kann in einem schwachfeuchten Zustand erfolgen. Der beschriebene Kalander setzt sich aus einer zumeist beheizten harten Stahlwalze und einer demgegenüber weichen Gegenwalze zusammen. Die beheizte Stahlwalze läuft mit einer höheren Umfangsgeschwindigkeit im Vergleich zu der weichen Gegenwalze, die letztlich für den Transport des bandförmigen Trägers durch den Kalander sorgt. So beobachtet man an dieser Stelle Umdrehungszahlen von allenfalls einigen 100 U/min bei der weichen Gegenwalze, während die harte und beheizte Stahlwalze (ca. 100°C bis 200°C, vorzugsweise ca. 150°C) mit 1000 bis 1500 U/min gefahren wird, und zwar je nach Umfang oder Durchmesser. Eine auf den durchlaufenden Träger ausgeübte Anpresskraft von ca. 300 N sorgt nun dafür, dass die beheizte Stahlwalze gegenüber der deutlich langsamer laufenden weichen Gegenwalze schleifend arbeitet, und zwar im Sinne eines "Friktionierens". Durch diese Friktion werden die Fasern des Trägers an der der Stahlwalze zugewandten Oberfläche vollkommen glattgeschliffen und der Träger erhält dort einen intensiven Glanz.

Es versteht sich, dass der beschriebene Prozess des Chintzens bzw. Glattschleifens der Oberfläche grundsätzlich bei einer Vielzahl von Trägertypen zum Einsatz kommen kann. Denkbar ist es hier, dass der Träger als Gewebe, Vlies oder vergleichbares Flächengebilde aus Fasern, insbesondere Kunststofffasern ausgeführt ist. Dabei hat es sich als vorteilhaft erwiesen, wenn der Träger mit einer Materialdicke von 0,06 mm bis 0,50 mm, vorzugsweise 0,06 mm bis 0,30 mm, insbesondere 0,15 mm bis 0,20 mm, ausgerüstet ist.

Die Eignung des Klebebandes zur Bündelung von Kabeln in Automobilen stellt sich besonders für den Fall ein, wenn der Träger eine Reißkraft von ca. 100 N/cm bis 300 N/cm besitzt. Dabei liegt seine Reißdehnung üblicherweise im Bereich zwischen ca. 10% und ca. 40%.

Um die Handeinreißbarkeit und damit die Verarbeitung des beschriebenen Klebebandes zu erleichtern, kann an dieser Stelle auch auf ein Gewebe aus verschiedenen Kett- und Schussfäden mit unterschiedlichen Reißdehnungen und Reißkräften zurückgegriffen werden. So hat es sich als günstig erwiesen, wenn die Kettfäden jeweils als Mischgewebe aus z.B. Polyester/Baumwolle ausgeführt sind, welches sich leicht von Hand einreißen lässt. Dagegen wird man für die Schussfäden zumeist auf ein reißfesteres Material, z.B. Polyester, zurückgreifen, um insgesamt die Handeinreißbarkeit in Richtung der Kettfäden zu erhöhen.

Obwohl das Klebeband aufgrund der glatten und verhältnismäßig kleinen Oberfläche als solches bereits ein hervorragendes Brandverhalten ohne Zusätze aufweist, schlägt die Erfindung dennoch das ergänzende Einbringen eines Flammschutzmittels vor. Hierbei mag es sich um Ammoniumpolyphosphat handeln. Auch die Verwendung eines modifizierten Polyesterwerkstoffes, welcher gleichsam ein in die Molekülstruktur eingebundenes Flammschutzmittel aufweist, wird von der Erfindung umfasst. Dieses in die Molekülstruktur eingebaute Flammschutzmittel wird bei entsprechender Temperatur frei und erzeugt die gewünschte feuerhemmende Wirkung.

Selbstverständlich ist es auch möglich und denkbar, das Alterungsvermögen bzw. Festigkeitsverluste durch direkte Sonneneinstrahlung zu verringern, was durch den Zusatz handelsüblicher UV-Stabilisatoren gelingt.

Daneben mag der Träger auch mit einer ein- und/oder beidseitigen Appretur- und/oder Lackschicht ausgerüstet sein, wobei als Lack bevorzugt eine Lackierung auf Acrylatbasis Verwendung findet. Hierdurch lässt sich eine Kaschierung darstellen, um andere Eigenschaften wie z.B. Abrollverhalten und Beschriftbarkeit zusätzlich zu verbessern. In vergleichbare Richtung zielen Maßnahmen zur Oberflächenprägung.

Der Träger kann in Längsrichtung und in Querrichtung unterschiedliche Reißfestigkeiten aufweisen. Das lässt sich bei einem Gewebebandträger beispielsweise dadurch erreichen, dass die in Längsrichtung verlaufenden Kettfäden dünner (also mit geringerer Reißfestigkeit) als zugehörige Schussfäden ausgerüstet sind. Auf diese Weise kann das Klebeband problemlos in Querrichtung eingerissen werden. Selbstverständlich ist es auch denkbar, die Kettfäden dicker als zugehörige Schussfäden auszubilden, um ein einfaches Einreißen in Längsrichtung zu ermöglichen, falls dies gewünscht wird.

Gegenstand der Erfindung ist auch die Verwendung des beschriebenen Klebebandes als Wickelband zum Bündeln bzw. zum Ummanteln von Kabeln in Automobilen. Dabei ist das betreffende Klebeband für diesen Anwendungsfall besonders prädestiniert, weil es sich aufgrund der geringen Herstellungskosten für den Einsatz am gesamten Automobil eignet. Das heißt, es muss nicht mehr zwischen Klebebändern für den Fahrzeuginnenraum und den Motorraum unterschieden werden. Vielmehr kann ein und dasselbe (kostengünstige) erfindungsgemäße Klebeband durchgängig eingesetzt werden.

Um eine sinnvolle Unterscheidung der mit den Klebebändern ausgerüsteten Kabelstränge zu ermöglichen, lässt sich der Träger problemlos färben. Das erreicht die Erfindung üblicherweise durch den Zusatz von anorganischen Pigmenten in das Extrudat, aus welchem in der Regel Filamente und dann ein Filamentgewebe hergestellt werden. Selbstverständlich ist es auch möglich und denkbar, neben einer solchen "in situ"-Färbung eine nachträgliche Farbgebung des Trägers vorzusehen. Die beschriebene anorganische Pigmentfärbung durch den Farbzusatz beim Extrudieren zeichnet sich durch besondere Farbstabilität und Alterungsbeständigkeit aus.

Insgesamt wird ein Klebeband zur Verfügung gestellt, das im Vergleich zu vorbekannten Ausgestaltungen mit deutlich weniger Material pro Flächeneinheit bei gleicher Dichte, d.h. Luftdurchlässigkeit, auskommt. Das wird ohne den Zusatz von Beschichtungen, Lacken etc. erreicht, wodurch die Wiederverwertbarkeit des Klebebandes unmittelbar und ohne großen Aufwand gegeben ist. Hierfür verantwortlich ist der beschriebene Prozess des zumindest teilweise erfolgten Oberflächenglattschliffes ein- und/oder beidseitig des Trägers. Das wird zumeist durch Chintzen erreicht, also einen Kalanderprozess, bei welchem die einzelnen Kalanderwalzen bewusst mit unterschiedlicher Drehzahl unter Darstellung einer Friktion der Oberfläche betrieben werden.

Infolge der Oberflächendichtigkeit und der verhältnismäßig kleinen Oberfläche des erfindungsgemäßen Trägers ist das Brennverhalten des Trägerbandes per se hervorragend, weil sich eine Flamme letztlich nur oberflächlich in den Träger hineinfrisst und hier dazu führt, dass dieser schmilzt und abtropft. Es ist also nicht damit zu rechnen, dass das Klebeband als solches zu brennen anfängt. Selbstverständlich kann das Flammschutzverhalten durch den beschriebenen Zusatz von Flammschutzmitteln noch darüber hinausgehend verbessert werden.

Üblicherweise kommt als Träger ein Gewebe zum Einsatz, welches aus einem Polymer, wie z.B. Polyester (oder auch Polypropylen) aufgebaut ist. Bewährt hat sich an dieser Stelle ein Filamentgewebe, also ein Gewebe, welches aus einzelnen Filamentfäden gewebt ist. Bei Einsatz eines Polyester-Filamentgewebes wird eine besonders hohe Temperaturstabilität erreicht. Grundsätzlich können aber auch Vliese oder vergleichbare Flächengebilde als Träger zum Einsatz kommen, solange sich diese in der beschriebenen Art zumindest bereichsweise an ihrer Oberfläche glattschleifen lassen. Hierin sind die wesentlichen Vorteile zu sehen.

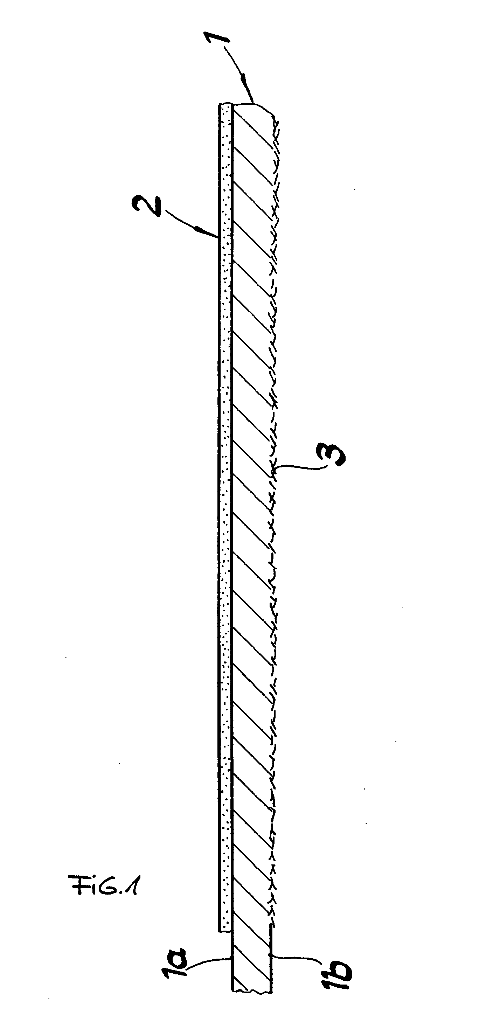

Im Folgenden wird die Erfindung anhand einer lediglich ein Ausführungsbeispiel darstellenden Zeichnung näher erläutert; die einzige Figur zeigt ein Klebeband entsprechend dem Anmeldungsgegenstand in schematischer Schnittdarstellung.

Die zeichnerische Darstellung lässt ein Klebeband erkennen, welches sich in seinem grundsätzlichen Aufbau aus einem bandförmigen Träger 1 und einer einseitig aufgebrachten Kleberbeschichtung 2 zusammensetzt. Im Ausführungsbeispiel bedeckt die Kleberbeschichtung 2 die eine Seite 1a des Trägers 1, wenngleich natürlich auch zusätzlich oder alternativ die andere Seite 1b eine entsprechende Kleberbeschichtung 2 aufweisen mag.

Im Rahmen der Erfindung ist der Träger 1 durchgängig (und nicht nur bereichsweise, was auch möglich ist) mit einer einseitig glattgeschliffenen Oberfläche 3 ausgerüstet, und zwar an der Seite 1b des Trägers 1.

Selbstverständlich lässt sich alternativ oder zusätzlich auch die andere Seite 1a des Trägers 1 mit der betreffenden glattgeschliffenen Oberfläche 3 versehen. Diese glattgeschliffene Oberfläche 3 wird dadurch erzeugt, dass der bandförmige Träger 1 eine Fuge eines Kalanders zwischen einer beheizten harten Stahlwalze und einer weichen Gegenwalze durchläuft. Dabei liegt an der Seite 1b des Trägers 1 die beheizte (nicht dargestellte) Stahlwalze an, welche mit einer (deutlich) höheren Umfangsgeschwindigkeit läuft, als die auf der gegenüberliegenden Flächenseite la des Trägers 1 anliegende elastische Gegenwalze, und daher schleift.

Aufgrund dieser Friktion werden einzelne Fasern, aus welchen der Träger 1 zusammengesetzt ist, an der erstgenannten Flächenseite 1b vollkommen glattgeschliffen und der Träger 1 erhält dort einen intensiven Glanz. Die hiermit verbundene Schleifspur ist anstelle der ursprünglichen Flächenseite 1b des Trägers 1 durch Striche in der Figur angedeutet und soll den dort entstehenden Chintzeffekt bzw. die glattgeschliffene Oberfläche 3 veranschaulichen, wie dies grundsätzlich in der DE 43 41 532 C1 beschrieben wird, auf die in diesem Zusammenhang ausdrücklich verwiesen sei.

Bei dem Träger 1 handelt es sich im Rahmen der Darstellung um ein Gewebe aus beispielsweise Polyester bzw. Polyesterfilamenten, wobei in Kettrichtung ca. 30 bis 50 Fäden/cm, vorzugsweise 40 bis 45 Fäden/cm, realisiert sind. Die Schussrichtung weist demgegenüber 20 bis 50 Fäden/cm, vorzugsweise 20 bis 30 Fäden/cm, auf, was jedoch insgesamt nicht zwingend und einschränkend ist. Sowohl in der Kettals auch in der Schussrichtung des Trägers 1 bzw. des dort eingesetzten Gewebes beobachtet man eine Garnfeinheit von 30 bis 180 denier, vorzugsweise 150 denier. Bei Einsatz von Kunststofffasern wird eine besonders hohe mechanische Stabilität erreicht.

Die Kettfäden in Längsrichtung des Trägers 1 sind dünner bzw. mit einem geringeren Querschnitt als die zugehörigen Schussfäden ausgerüstet. Dadurch besitzt der Träger 1 in Längsrichtung und in Querrichtung unterschiedliche Reißfestigkeiten. Auf diese Weise kann der Träger 1 und mit ihm das daraus hergestellte Klebeband problemlos in Querrichtung (per Hand) eingerissen werden.

Der Träger 1 bewegt sich dickenmäßig in einem Bereich zwischen 0,06 mm und 0,50 mm und verfügt über eine Dichte bzw. Luftdurchlässigkeit von weniger als 30 1/m²s. Die Reißkraft der Trägers 1 (in Querrichtung) lässt sich mit 100 N/cm bis 300 N/cm beziffern, wobei die Reißdehnung ca. 10 % bis 40 % beträgt.

Durch den Zusatz eines Flammschutzmittels, z.B. Ammoniumpolyphosphat, gelingt eine insgesamt flammfeste Ausrüstung des Trägers 1 und damit des Klebebandes im Ganzen. - Nicht dargestellt ist die Möglichkeit, den Träger 1 mit einer zusätzlichen ein- und/oder beidseitigen Appretur- bzw. Lackbeschichtung zu versehen, die bevorzugt auf Acrylatbasis hergestellt ist.

Die Kleberbeschichtung 2 ist im Rahmen des Ausführungsbeispieles so hergestellt worden, dass ein Schmelzhaftklebstoff auf die Seite bzw. Flächenseite 1a des Trägers 1 aufgebracht worden ist, also sich die Kleberbeschichtung 2 auf der der glattgeschliffenen Oberfläche 3 abgewandten Seite des Trägers 1 befindet. Zur Darstellung der Kleberbeschichtung kommt bevorzugt ein Schmelzhaftklebstoff zum Einsatz, der auf Acrylat- oder Kautschukbasis hergestellt ist, wobei es sich hier besonders um einen UV-vernetzbaren Acrylathaftklebstoff handeln mag.

Das beschriebene Klebeband wird üblicherweise zum Ummanteln und Bündeln von beispielsweise Kabeln, Rohren oder dergleichen langgestreckten Objekten eingesetzt. Besonders bevorzugt ist die Anwendung des Klebebandes als Wickelband zum Ummanteln von Kabelbündeln in Automobilen, vorzugsweise im Motorraum von Automobilen.

## Patentansprüche

1. Klebeband, mit einem bandförmigen Träger (1), und mit einer ein- oder beidseitig auf den Träger (1) aufgebrachten Kleberbeschichtung (2), **da-durch gekennzeichnet, dass** der Träger (1) als Gewebe, Vlies oder vergleichbares Flächengebilde aus Fasern, insbesondere Kunststofffasern, ausgeführt ist und zumindest bereichsweise ein- oder beidseitig eine glattgeschliffene Oberfläche (3) aufweist.

2. Klebeband nach Anspruch 1, **dadurch gekennzeichnet, dass** die glattgeschliffene Oberfläche (3) des Trägers (1) gechintzt ist.

3. Klebeband nach Anspruch 1 oder 2, **dadurch gekennzeichnet, dass** der Träger (1) eine Materialdicke von 0,06 mm bis 0,50 mm aufweist.

4. Klebeband nach einem der Ansprüche 1 bis 3, **dadurch gekennzeichnet, dass** der Träger (1) eine Reißkraft von ca. 100 N/cm bis 300 N/cm besitzt.

5. Klebeband nach einem der Ansprüche 1 bis 4, **dadurch gekennzeichnet, dass** der Träger (1) eine Reißdehnung von ca. 10% bis ca. 40% aufweist.

6. Klebeband nach einem der Ansprüche 1 bis 5, **dadurch gekennzeichnet, dass** der Träger (1) durch Zusatz eines Flammschutzmittels, z.B. Ammoniumpolyphosphat, oder durch Zugabe eines modifizierten (Polyester-)Werkstoffes, flammfest ausgebildet ist.

7. Klebeband nach einem der Ansprüche 1 bis 6, **dadurch gekennzeichnet, dass** der Träger (1) mit einer ein- und/oder beidseitigen Appretur- bzw. Lackbeschichtung ausgerüstet ist.

8. Klebeband nach einem der Ansprüche 1 bis 7, **dadurch gekennzeichnet, dass** der Träger (1) in Längsrichtung und in Querrichtung unterschiedliche Reißfestigkeiten aufweist.

9. Klebeband nach einem der Ansprüche 1 bis 8, **dadurch gekennzeichnet, dass** als Kleberbeschichtung (2) ein Schmelzklebstoff auf vorzugsweise Acrylat- oder Kautschukbasis zum Einsatz kommt.

10. Verwendung eines Klebebandes nach einem der Ansprüche 1 bis 9 als Wickelband zum Ummanteln von Kabeln in Automobilen.

## Claims

1. An adhesive tape, with a tape-type support (1), and with an adhesive coating (2) applied to one and/or both sides of the support (1), **characterised in that** the support (1) at least in sections has a polished surface (3) on one and/or both sides.

2. The adhesive tape as claimed in Claim 1, **characterised in that** the polished surface (3) of the support (1) is chintzed.

3. The adhesive tape as claimed in any one of Claims 1 to 3, **characterised in that** the support (1) has a material thickness of 0.06 mm to 0.50 mm.

4. The adhesive tape as claimed in any one of Claims 1 to 4, **characterised in that** the support (1) has a tear strength of ca. 100 N/cm to 300 N/cm.

5. The adhesive tape as claimed in any one of Claims 1 to 5, **characterised in that** the support (1) has a tear expansion of ca. 10% to ca. 40%.

6. The adhesive tape as claimed in any one of Claims 1 to 6, **characterised in that** the support (1) is designed to be flame-proof by the addition of a flame-proof agent, e.g. ammonium polyphosphate, or by addition of a modified (polyester) material.

7. The adhesive tape as claimed in any one of Claims 1 to 7, **characterised in that** the support (1) is fitted with a finishing or respectively lacquer coating applied to one and/or both sides.

8. The adhesive tape as claimed in any one of Claims 1 to 8, **characterised in that** the support (1) has different tear strengths in the longitudinal and transverse directions.

9. The adhesive tape as claimed in any one of Claims 1 to 9, **characterised in that** a hot-melt adhesive based preferably on acrylate or rubber is used as adhesive coating (2).

10. Use of an adhesive tape as claimed in any one of Claims 1 to 10 as a winding tape for sheathing cables in automobiles.

## Revendications

1. Ruban adhésif, comportant un support en forme de bande (1) et un enrobage de colle (2) appliqué sur le support (1) sur une ou deux faces, **caractérisé en ce que** le support (1), est réalisé sous forme de textile, non-tissé ou structure de surface similaire, en fibres, notamment en fibres de matière plastique, et présente du moins par endroits, sur une ou deux faces, une surface polie lisse (3).

2. Ruban adhésif selon la revendication 1, **caractérisé en ce que** la surface polie lisse (3) du support (1) est chintzée.

3. Ruban adhésif selon la revendication 1 ou 2, **caractérisé en ce que** le support (1) présente une épaisseur de matière de 0,06 à 0,50 mm.

4. Ruban adhésif selon une des revendications 1 à 3, **caractérisé en ce que** le support (1) possède une force d'arrachement allant d'environ 100 N/cm à 300 N/cm.

5. Ruban adhésif selon une des revendications 1 à 4, **caractérisé en ce que** le support (1) possède un allongement à la rupture allant d'environ 10 % à environ 40 %.

6. Ruban adhésif selon une des revendications 1 à 5, **caractérisé en ce que** le support (1) est ignifugé par adjonction d'un agent anti-feu, par exemple du polyphosphate d'ammonium, ou par adjonction d'un matériau (de polyester) modifié.

7. Ruban adhésif selon une des revendications 1 à 6, **caractérisé en ce que** le support (1) est équipé d'un enrobage d'apprêt ou de vernissage sur une et/ou les deux faces.

8. Ruban adhésif selon une des revendications 1 à 7, **caractérisé en ce que** le support (1) présente des allongements à la rupture différents dans le sens longitudinal et dans le sens transversal.

9. Ruban adhésif selon une des revendications 1 à 8, **caractérisé en ce qu'**on utilise comme enrobage de colle (2) une colle à chaud de préférence à base d'acrylate ou de caoutchouc.

10. Utilisation d'un ruban adhésif selon une des revendications 1 à 9 comme bande d'enroulement pour l'habillage de câbles dans les automobiles.
